# EUROPÄISCHE PATENTSCHRIFT

(11) **EP 2 582 477 B1**
(45) Veröffentlichungstag und Bekanntmachung des Hinweises auf die Patenterteilung: **11.03.2015**
(21) Anmeldenummer: 11738938.7
(22) Anmeldetag: 09.06.2011
(51) Int. Cl.: B22F 3/10, F16C 9/00, C22C 33/02, C22C 38/02

(54) **BAUELEMENT AUS EINER EISENBASIERTEN SINTERLEGIERUNG MIT REDUZIERTER METALLHAFTUNG UND VERFAHREN ZU DESSEN HERSTELLUNG**
STRUCTURAL COMPONENT MADE OF AN IRON-BASED SINTER-ALLOY HAVING REDUCED METAL ADHESION AND METHOD FOR ITS PRODUCTION
ÉLÉMENT STRUCTURAL D'UN ALLIAGE FERREUX FRITTÉ À ADHÉRENCE MÉTALLIQUE RÉDUITE ET PROCÉDÉ DE SA PRODUCTION

(30) Priorität: 10.06.2010 AT 9462010
(43) Veröffentlichungstag der Anmeldung: 24.04.2013
(73) Patentinhaber: Miba Sinter Austria GmbH, 4663 Laakirchen (AT)
(72) Erfinder: STETINA, Gerold, A-4840 Vöcklabruck (AT); GRAFINGER, Matthias, A-4810 Gmunden (AT); REISNER, Martin, A-8642 St. Lorenzen/Mürztal (AT)
(74) Vertreter: Burger, Hannes
(86) Internationale Anmeldenummer: PCT/AT2011/000259
(87) Internationale Veröffentlichungsnummer: WO 2011/153573

(56) Entgegenhaltungen:
- JP-A- 2005 226 141
- US-A1- 2008 146 467

## Beschreibung

Die Erfindung betrifft eine Baugruppe, insbesondere Pumpe für ein Kraftfahrzeug, mit zumindest zwei auf Gleitung beanspruchten metallischen Bauelementen, insbesondere einem Stator und einem Rotor, die jeweils eine Gleitfläche aufweisen, die im Betrieb aneinander abgleiten, wobei zumindest eines der Bauelemente zumindest im Bereich der Gleitbeanspruchung aus einem metallischen Sinterwerkstoff mit einer eisenbasierten Matrix besteht, der neben Eisen Kohlenstoff und bis zu 10 Gew.-% zumindest eines Nichteisenmetalls enthält, wobei der Kohlenstoffanteil mindestens 1 Gew.-% und maximal 10 Gew.-% beträgt und zumindest ein Teil des Kohlenstoffs partikulär ungebunden in der Matrix vorliegt, und wobei die Matrix ein aus Perlit und Ferrit zusammengesetztes Gefüge aufweist, wobei auch Bainit auftreten kann. Weiter betrifft die Erfindung ein Verfahren zur Herstellung eines derartigen Bauelementes mit reduzierter Metallhaftung durch Flüssigphasensintern eines Pulvergemisches aus einem metallischen Sinterwerkstoff auf Eisenbasis, der neben Eisen Kohlenstoff und bis zu 10 Gew.-% zumindest eines Nichteisenmetalls enthält, wobei der Kohlenstoffanteil in einem Anteil von mindestens 1 Gew.-% bis maximal 10 Gew.-% der Eisenbasis zugesetzt wird und zumindest ein Teil des Kohlenstoffs, der während oder nach dem Sintern partikulär ungebunden in der Matrix vorliegend, ausgeschieden wird, und wobei die Matrix ein aus Perlit und Ferrit zusammengesetztes Gefüge aufweist, in dem auch Bainit auftreten kann.

Zur Verbesserung der Gleitfähigkeit von metallischen Oberflächen ist bekannt, dass die auf Gleitung beanspruchten Oberflächen mit Phosphatschichten, beispielsweise Manganphosphatschichten, überzogen werden. Obwohl sich diese Beschichtungen bewährt haben, ist damit ein höherer Aufwand in der Herstellung derartiger Bauelemente verbunden. Darüberhinaus muss auch eine entsprechend gleichmäßige Schichtdicke sowie eine hohe Haftfestigkeit dieser Schichten gewährleistet werden, wodurch sich der Herstellaufwand weiters erhöht.

Aus der US 2008/0146467 A1 ist ein Gleitstück aus einer gesinterten Eisenbasislegierung bekannt, die zwischen 1 Gew.-% und 15 Gew.-% Graphit und zwischen 10 Gew.-% und 50 Gew.-% Kupfer, sowie gegebenenfalls weitere Nichteisenmetalle enthält. Der Graphit liegt dabei in einem Anteil zwischen 1 Gew.-% und 14 Gew.-% partikulär vor.

Aus der JP 2005-226141 A ist ein Sinterbauteil aus einer Eisenbasislegierung bekannt. Die Eisenbasislegierung wird durch mischen entsprechender Pulver hergestellt, wobei diesem Pulver SiC und gegebenenfalls Graphit zugesetzt wird. Während des Sinterns in einer nichtoxidierenden Atmosphäre entsteht aus dem SiC freier C, der in die Matrix dispers eingelagert wird.

Der vorliegenden Erfindung liegt die Aufgabe zugrunde, ein Möglichkeit zu schaffen, mit der die Metallhaftung zwischen metallischen Bauelementen, insebsondere in einer Pumpe für die Anwendung in Kraftfahrzeugen, reduziert werden kann.

Diese Aufgabe wird jeweils bei der voranstehend genannten Baugruppe gemäß Anspruch 1 dadurch gelöst, dass der Perlitanteil der Matrix in Richtung auf die Gleitfläche zunimmt, und bei dem Verfahren gemäß Anspruch 14 zur Herstellung eines Bauelementes dadurch, dass das Bauelement nach dem Sintern und vor einer optionalen mechanischen Bearbeitung kurzzeitig einer Wärmebehandlung unterzogen wird, sodass das Bauelement nicht zur Gänze auf die Temperatur erhitzt wird, sodass der Perlitanteil der Matrix in Richtung auf die Gleitfläche zunimmt.

Von Vorteil ist dabei, dass durch den ungebunden vorliegenden Kohlenstoff das Bauelement, d.h. die Gleitfläche des Bauelementes, einen geringeren Reibungskoeffizienten in der Paarung mit dem weiteren metallischen Bauelement der Baugruppe aufweist. Es kann damit auf eine Phosphatschicht verzichtet werden, sodass die beiden Gleitflächen der beiden metallischen Bauelemente unmittelbar aufeinander abgleiten können. Der frei in der Eisenmatrix vorliegende Kohlenstoff bewirkt dabei, dass die Gleitfläche einen Selbstschmiereffekt aufweist, sodass die Baugruppe verbesserte tribologische Eigenschaften aufweist und damit auch in hochbelasteten Verbrennungsmotoren eingesetzt werden kann, ohne dass nach der pulvermetallurgischen Herstellung eine weitere Nachbehandlung erforderlich ist. Aufgrund von frei vorliegendem Kohlenstoff im Gefüge des Bauteils weist dieser auch hervorragende Notlaufeigenschaften auf. Überraschenderweise hat sich auch gezeigt, dass die mechanischen Kennwerte des Sinterwerkstoffes auch ohne Nachbehandlungen und trotz des hohen Kohlenstoffanteils jenen von GJS 50 bzw. GJV 50 zumindest annähernd vergleichbar sind, wodurch dessen Verwendung in voranstehend genannten Pumpen oder für Gleitflächen von Kurbelwellen und Lagerbuchsen besonders vorteilhaft ist. Überraschend ist auch, dass, obwohl GJS 50 teilweise vergleichbare Anteile an Graphit aufweist, dieser Werkstoff deutlich schlechtere Notlauf- bzw. tribologische Eigenschaften zeigt als der Sinterwerkstoff des Bauelementes der Baugruppe. Vermutlich liegt dies an der bei weitem feineren Verteilung des Kohlstoffs - wobei im Gefüge vereinzelt auch kohlenstoffarme Ferrithöfe vorliegen können - trotz der Flüssigphasensinterung in dem verwendeten Sinterwerkstoff. Durch die Flüssigphasensinterung wird andererseits eine Reduzierung der Porigkeit des Sinterwerkstoffes erreicht, wodurch dieser deutlich bessere mechanische Eigenschaften aufweist, als Sinterwerkstoffe, die nicht mit einer Flüssigphasenbeteiligung gesintert werden.

Dadurch, dass der Perlitanteil der Matrix in Richtung auf die Gleitfläche zunimmt, weist die Oberfläche neben der verbesserten Tribologie auch eine verbesserte Festigkeit auf.

Eine deutliche Zunahme der Notlaufeigenschaften ohne Verschlechterung der Festigkeitswerte des Sinterwerkstoffes konnte beobachtet werden, wenn der Anteil des ungebunden Kohlenstoffs bezogen auf den Gesamtkohlenstoffgehalt des Sinterwerkstoffes zumindest 80 %, insbesondere zumindest 90 % beträgt.

Gemäß einer bevorzugten Ausführungsvariante beträgt der Kohlenstoffanteil zwischen 1,5 Gew.-% und 8 Gew.-%, insbesondere zwischen 1,8 Gew.-% und 2,1 Gew.-%. Durch die Einhaltung dieser Bereiche, insbesondere des letztgenannte Bereichs, kann eine homo-genere Verteilung des Kohlenstoffs in der Matrix erreicht werden, wodurch sowohl die tribologischen Kennwerte als auch die Festigkeitskennwerte der Sinterlegierung ver-bessert werden können. Insbesondere mit einem Kohlenstoffanteil zwischen 1 Gew.-%, bzw. 1,5 Gew.-%, und 2,1 Gew.-% kann die Bauteilgenauigkeit verbessert werden, da der Anteil der Flüssigphase relativ gering ist, wodurch Bauteilverzüge besser vermieden werden können. Niedrige Kohlenstoffanteile aus diesem Bereich bedingen auch eine höhere Sintertemperatur zur Flüssingphasensinterung, wodurch eine höhere Verdichtung des Bauelementes während dem Sinterprozess erreicht werden kann.

Obwohl im GJS 50 der Graphit vorzugsweise als "Kugelgraphit" vorliegt, um damit dessen mechanischen Eigenschaften zu verbessern, hat sich im Zuge der Erfindung herausge-stellt, das es in Hinblick auf die gewünschten Eigenschaften des Sinterwerkstoffes, insbesondere in Hinblick auf die verbesserten tribologischen Eigenschaften von Vorteil ist, wenn der ungebundene Kohlstoff eine Partikelgröße aufweist mit einer Länge zwischen 50 µm und 300 µm, insbesondere zwischen 100 µm und 200 µm, und einer Breite zwischen 5 µm und 70 µm, insbesondere zwischen 8 µm und 18 µm, wobei es zusätzlich von Vorteil ist, wenn das Verhältnis der Länge zur Breite der Kohlenstoffpartikel zumindest 2:1, insbsondere zumindest 5:1, bevorzugt mindestens 10:1, beträgt.

Der Kohlenstoff kann in der bzw. den Kernschichten globularer und gröber vorliegen als in der bzw. den Randschichten des Bauelementes, wobei unter Randschicht eine Schicht-dicke bis 2mm verstanden wird, womit erreicht werden kann, dass die Kernschichten eine verringerte Kerbwirkung zeigen, die Randschichten jedoch aufgrund des vermikulär geformten und feiner verteilten Grafits bessere Gleiteigenschaften aufweist. Unter der Randschicht ist dabei nicht unbedingt jene Schicht zu verstehen, die nach dem Sintern vorliegt, sondern jenen Schicht, die am fertigen Bauteil ausgebildet ist, also beispielsweise nach einer mechanischen Endbearbeitung des Bauteils durch eine abtragende Bearbeitung zur Erhöhung der Bauteilgenauigkeit. Insbesondere diese abtrgagende bzw. spanende Nachbearbeitung hat auch den Vorteil, dass damit Grafitkörner direkt an der Oberfläche zu liegen kommen bzw. frei gelegt werden, wodurch die Tribologie des Bauteils verbessert werden kann. Der Unterschied des mittleren Korndurchmesser kann dabei zumindest 10 % betragen. Unter dem mittleren Korndurchmesser wird dabei das arithmetische Mittel des Durchmessers von 20 Körnern, gemessen im Schliffbild, verstanden. Beeinflusst kann dies durch Abkühlungsunterschiede der Kernschichten im Vergleich zu den Randschichten werden, beispieslweise durch eine rasche Abkühlung mit einer Abkühlrate von zumindest 0,5 K/s.

Weiters kann der Grafit durch entsprechende Prozessführung bzw. nachgeschaltete Wärmebehandlungen bewusst globularer ausgeformt werden, beispielsweise durch Tempern bei einer Temperatur im Bereich zwischen 200 °C und 500 °C, insbesondere im Bereich zwischen 300 °C und 400 °C, für eine Dauer von 10 Minuten bis 60 Minuten, insbesondere 20 Minuten bis 40 Minuten.. Dadurch kann auch auf die Perlit: Ferrit Verteilung im Bauelement Einfluß genommen werden.

In Hinblick auf die mechanischen Eigenschaften, d.h. die Festigkeitswerte, des Sinterwerkstoffes weist dessen Matrix ein aus Perlit und Ferrit zusammengesetztes Gefüge auf. Insbesondere ist gemäß einer Ausführungsvariante dazu vorgesehen, dass das Verhältnis von Perlit zu Ferrit zwischen 95 : 5 und 50 : 50, vorzugsweise zwischen 90 : 10 und 80 : 20, beträgt. Insbesondere durch die Einhaltung eines Verhältnisses aus diesem Bereich ermöglicht einen ausgewogenen Eigenschaftsmix hinsichtlich Festigkeit und Gleitfähigkeit der Oberfläche des Bauelementes.

Zur Verbesserung der Tribologie der Oberfläche des Bauelementes ist es außerdem von Vorteil, wenn der Anteil an freiem Kohlenstoff in Richtung auf die Gleitfläche zunimmt. Es wird damit aber auch erreicht, dass das Bauelement im Inneren, d.h. im Bereich einer Kernschicht, eine höhere Festigkeit aufweist.

Vorzugsweise ist zumindest eines der Nichteisenmetalle durch Silizium gebildet, wobei gemäß einer Ausführungsvariante der Siliziumanteil zwischen 0,5 Gew.-% und 6,0 Gew.-% beträgt. Es kann damit erreicht werden, dass bereits bei geringen absoluten Anteilen an Kohlenstoff in der Matrix der relative Anteil an freiem Kohlenstoff im Vergleich zum gebundenen Kohlenstoff deutlich größer ist, da durch Silizium die Löslichkeit eine Verschiebung des Eutektikums im Fe-C-System bewirkt wird, wodurch die verbesserten tribologischen Eigenschaften mit höherer Sicherheit erreicht werden können, auch bei geringfügigen Schwankungen der Prozessparameter. Es kann damit auch erreicht werden, dass die Härte des zu verpressenden Pulvers auch bei hohen Kohlenstoff-gehalten relativ niedrig gehalten werden kann, sodass die Verpressbarkeit des Pulvers trotz hohem Kohlenstoffanteil besser ist.

Insbesondere als vorteilhaft haben sich dabei Siliziumgehalte zwischen 0,8 Gew.-% und 1,6 Gew.-% erwiesen.

In Hinblick auf die tribologischen Eigenschaften des Bauelementes ist es aus voran-stehend genannten Gründen von Vorteil, wenn der Anteil an Silizium zum Anteil an Kohlenstoff ausgewählt ist aus einem Bereich von 1 : 1 bis 4 : 1, insbesondere aus einem Bereich von 2 : 1 bis 3 : 1.

Besonders vorteilhaft wirkt sich eine ebene Oberfläche mit definierter Rauheit auf die tribologischen Eigenschaften aus. Typischerweise werden tribologisch hoch beanspruchte Flächen mechanisch geschliffen, wodurch die dabei an der Oberfläche frei liegenden ungebundenen Grafite die Notlaufeigenschaften besonders begünstigen. In diesem Zusammenhang wurde gefunden, dass eine Oberflächenrauheit der Gleitfläche, d.h. eine gemittelte Rauheit Rz nach DIN EN ISO 4287, einen Maximalwert von 2 µm, insbesondere 1,5 µm, nicht überschreiten sollte.

Das Bauelement aus dem Sinterwerkstoff weist bevorzugt eine Dichte von zumindest 95 % der theoretischen Volldichte auf. Mit anderen Worten ausgedrückt weist das Bauelement eine relativ geringe Porigkeit auf, wodurch dessen Anwendung insbesondere in Pumpen aufgrund einer verringerten Korrosionsgefährdung und einer verbesserten Flüssigkeitsdichtheit verbessert werden kann.

Besonders vorteilhaft weist das Bauelement allerdings eine Dichte von zumindest 98 % der theoretischen Volldichte zumindest im Bereich der Gleitfläche bzw. in gleitflächen-nahen Bereichen (entspricht einer Tiefe von bis zu 100 µm gemessen ab der Gleitfläche), bevorzugt im gesamten Bauteil, auf.

Wie bereits voranstehend erwähnt, ist es bevorzugt, wenn die Gleitfläche frei von einer Phosphatbeschichtung ist.

Gemäß einer Ausführungsvaiante des Verfahrens ist vorgesehen, dass das Sintern und/oder das nach dem Sintern anschließende Abkühlen des Bauelementes in einer kohlenstoffhältigen Atmosphäre durchgeführt wird. Es kann damit eine Aufkohlung, d.h. Erhöhung des Kohlenstoffanteils, zumindest in oberflächennahen Bereich erreicht werden, wobei auch dieser Kohlenstoffanteil zumindest anteilsweise ungebunden in der Matrix vorliegt. Andererseits können damit aber gegebenenfalls während des Sinterns aufgetretene Verluste an Kohlenstoff zumindest teilweise wieder ausgeglichen werden.

In Hinblick auf das bevorzugte, voranstehend erwähnte Gefüge der Matrix ist es von Vorteil, wenn das Bauelement nach dem Sintern mit einer Abkühlrate von maximal 15 K /s, insbesondere maximal 8 K/s, beispielsweise mit einer Abkühlrate zwischen 0,8 K/s und 1 K/s, abgekühlt wird.

Zum besseren Verständnis der Erfindung wird diese anhand des nachfolgenden Beispiels näher erläutert.

Es zeigt dazu in vereinfachter schematischer Darstellung:
- Fig. 1: die Ausbildung einer Baugruppe als Pumpe für ein Kraftfahrzeug in Stirnansicht geschnitten;
- Fig. 2: eine Ausführungsvariante der Baugruppe.

Einführend sei festgehalten, dass die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

Der Bereich 1 Gew.-% bis 10 Gew.-% für den Kohlenstoffgehalt und die voranstehend genannten bevorzugten Teilbereiche dazu, sind so zu verstehen, dass es im Rahmen der Erfindung auch möglich ist, das der Bereich für den Kohlenstoffgehalt in der Legierung eine untere Grenze von 1 Gew.-% und eine obere Grenze von 8 Gew.-% oder 4 Gew.- aufweist. Ebenso kann der Bereich für den Kohlenstoffgehalt eine untere Grenze von 4 Gew.-% oder 8 Gew.-% und eine obere Grenze von 10 Gew.-% aufweisen. In analoger Weise gelten diese Ausführungen auch für die in dieser Beschreibung weiters angeführten Bereiche.

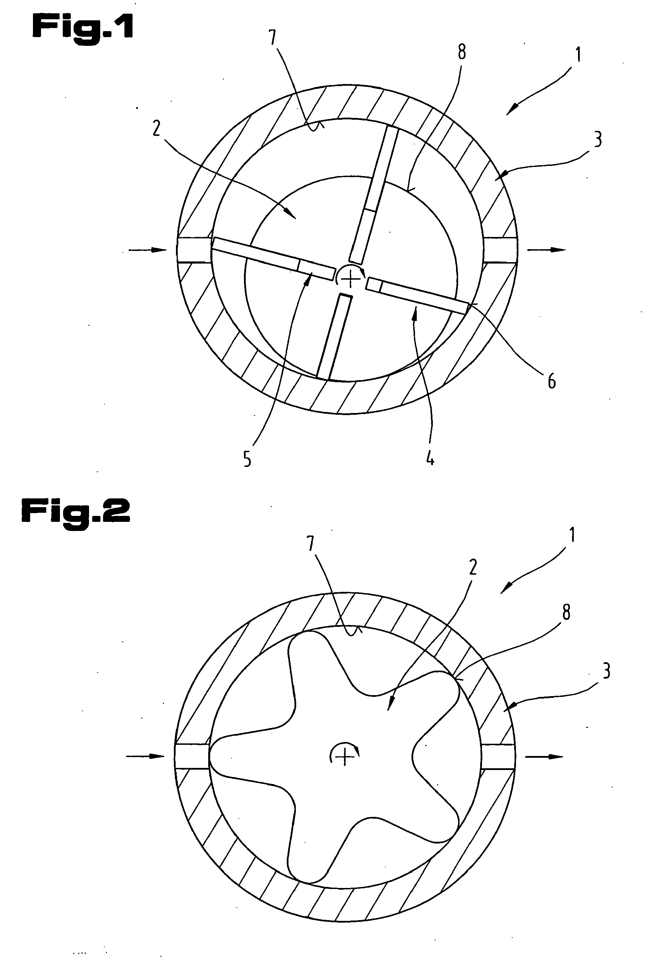

Fig. 1 zeigt eine vereinfachte Darstellung einer Baugruppe 1 in Form einer Pumpe. Da die konstruktiven Details einer derartigen Pumpe nicht Gegenstand der Erfindung sind, wird auf eine detaillierte Wiedergabe einer derartigen Pumpe verzichtet, da diese ohnehin dem Fachmann geläufig sind.

Die Baugruppe 1 weist ein erstes Bauelement 2 in Form eines Rotors und ein zweites Bauelement 3 in Form eines Stators oder Gehäuses auf, wobei das erste Bauelement 2 zumindest im Bereich des Umfanges vom zweiten Bauelement 3 umgeben ist. Am ersten Bauelement 2 sind Flügelelemente 4 radial verschiebbar in entsprechenden Ausnehmungen 5 derart angeordnet, dass sie aufgrund der durch die Drehbewegung des ersten Bauelementes 2 verursachten Fliehkraft mit einer Stirnseite 6 an einer inneren Oberfläche 7 des zweiten Bauelementes 3 anliegen. Gegebenenfalls können diese Flügelelemente 4 auch federunterstützt an der inneren Oberfläche 7 anliegen, wozu in den Ausnehmungen 5 Federelemente angeordnet sein können.

Es sei erwähnt, dass die dargestellte Anzahl der Flügelelemente 4 nicht beschränkend für die Erfindung zu sehen ist.

Selbstverständlich ist auch eine konstruktiv andere Ausgestaltung der als Pumpe ausgebildeten Baugruppe 1 möglich. Um dies zu verdeutlichen zeigt Fig. 2 eine Ausführungsvariante der Baugruppe 1 in Form einer Pumpe ohne Flügelelemente 4 und mit einer anderen Gestaltung des ersten Bauelementes 2 in Form des Rotors, das wiederum innerhalb des zweiten Bauelementes 3 angeordnet ist und an der inneren Oberfläche 7 des Bauelementes 3 mit einem Teil einer Oberfläche 8 abgleitet, wie dies auch bei der Ausführung nach Fig. 1 der Fall ist.

Die Oberflächen 7 und 8 der Bauelemente 2, 3 sind Gleitflächen, an denen das jeweils andere Bauelement 2, 3 abgleitet.

Wesentlich für die Erfindung ist, dass zumindest eines der Bauelemente 2, 3 der Baugruppe zumindest im Bereich der Oberfläche 7 oder 8, bevorzugt jedoch zur Gänze, aus einem metallischen Sinterwerkstoff mit einer eisenbasierten Matrix besteht, die neben Eisen Kohlenstoff und bis zu 10 Gew.-% zumindest eines Nichteisenmetalls enthält, wobei der Kohlenstoffanteil mindestens 1 Gew.-% und maximal 10 Gew.-% beträgt und zumindest ein Teil des Kohlenstoffs partikulär ungebunden in der Matrix vorliegt. Es besteht aber auch die Möglichkeit, dass beide Bauelemente 2, 3 zumindest im Bereich der aufeinander abgleitenden Oberflächen 7, 8 aus dem Sinterwerkstoff bestehen. Als Nichteisenmetalle werden Metalle aus einer Gruppe umfassend oder bestehend aus Si, Ni, Mo, Mn, Mg, V, W oder A1 eingesetzt.

In Hinblick auf die Gefügeausbildung der Matrix, insbesondere auf die Gefügezusammensetzung durch Perlit und Ferrit, wobei auch Bainit auftreten kann, ist es von Vorteil, wenn zumindest eines der Nichteisenmetalle durch Silizium gebildet ist. Insbesondere beträgt der Siliziumanteil zwischen 0,5 Gew.-% und 6,0 Gew.-%, vorzugsweise zwischen 0,8 Gew.-% und 1,6 Gew.-%. Sollten zusätzliche Nichteisenmetalle eingesetzt werden, wird deren Anteil bevorzugt auf in Summe maximal 1 Gew.-% beschränkt.

Der Anteil an Ni kann zwischen 0 Gew.-% und 6,0 Gew.-%, insbesondere zwischen 0 Gew.-% und 1,2 Gew.-%, betragen. Es können damit die Korrosionsbeständigkeit, die Festigkeit und die Härte der Bauelemente 2, 3 verbessert werden, was insbesondere in Hinblick auf die Ausbildung der Bauelemente 2, 3 als Pumpenbestandteile von Vorteil ist.

Der Anteil an Mo kann zwischen 0 Gew.-% und 1,5 Gew.-%, insbesondere zwischen 0 Gew.-% und 0,9 Gew.-%, betragen, wodurch die Zeitstandfestigkeit verbessert werden kann.

Der Anteil an Mn kann zwischen 0 Gew.-% und 2,0 Gew.-%, insbesondere zwischen 0,1 Gew.-% und 0,3 Gew.-%, betragen. Es können damit die Festigkeit und die Härte der Bauelemente 2, 3 verbessert werden.

Der Anteil an Mg kann zwischen 0 Gew.-% und 6,0 Gew.-%, insbesondere zwischen 0,2 Gew.-% und 0,8 Gew.-%, betragen, wodurch der Habitus des freien Kohlenstoffes beeinflusst werden kann.

Der Anteil an V kann zwischen 0 Gew.-% und 2,0 Gew.-%, insbesondere zwischen 0,05 Gew.-% und 0,15 Gew.-%, betragen. Es können damit die Festigkeit und die Härte der Bauelemente 2, 3 verbessert werden.

Der Anteil an W kann zwischen 0 Gew.-% und 1,5 Gew.-%, insbesondere zwischen 0 Gew.-% und 0,1 Gew.-%, betragen. Es kann damit die Verschleißbeständigkeit der Bauelemente 2, 3 verbessert werden.

Der Anteil an A1 kann zwischen 0 Gew.-% und 6,0 Gew.-%, insbesondere zwischen 0,05 Gew.-% und 0,3 Gew.-%, betragen. Es kann damit die Verschleißbeständigkeit der Bauelemente 2, 3 verbessert werden.

Das Bauelement 2 oder 3 wird bzw. die Bauelemente 2, 3 werden mittels eines pulvermetallurgischer Verfahrens hergestellt, dass im Folgenden kurz beschrieben wird.

Im Wesentlichen umfasst die Herstellung die Schritte Pulvermischen, Pressen, Entwachsen und Sintern. Gegebenfalls kann an das Sintern eine thermische Nachbehandlung und/oder eine mechanische Nachbearbeitung anschließen.

### 1) Pulvermischen

Eisen-Pulvermischungen mit insgesamt bis zu 10 Gew.-%, vorzugsweise maximal 7 Gew.-%, metallischer Nichteisen-Legierungselemente, bis zu 10 Gew.-% Kohlenstoff in Form von Grafit, bis zu 1,5 Gew.-% Presshilfsmittel und bis zu 0,5 Gew.-% organischem Binder werden hergestellt. Diese Mischungen werden beispielsweise konventionell aus Reineisenpulver oder vor- oder anlegierten Eisenpulvern als Basismaterial und Zugabe von Legierungselementen sowie Presshilfsmittel hergestellt. Oder es werden so genannte Muttermischung in hochkonzentrierter Form, gegebenenfalls auch unter Einsatz von Temperatur und/oder Lösungsmitteln, vorgemischt und anschließend mit Eisenpulver vermengt oder durch Zugabe der einzelnen Bestandteile direkt ins Eisenpulver vermischt.

Als Bindemittel können Harze, Silane, Öle, Polymere oder Kleber verwendet werden. Presshilfsmittel sind u.a. Wachse, Stearate, Silane, Amide, Polymere.

Vorlegierungselemente können sein Mo, V, Si, Mn.

### 2) Pressen

Die nach oben genanntem Verfahren vorbehandelten Eisenpulvermischungen werden durch koaxiale Pressverfahren verdichtet und in Form gebracht. Hierbei ist darauf zu achten, dass die während der nachfolgenden Prozessschritte entstehenden Form- und Gestaltsänderungen bei der Herstellung der Presswerkzeuge bereits berücksichtigt sind. Die Verwendung entsprechender Schmiermittel und Bindemittel wirken in Hinblick auf die Verdichtung unterstützend. Je nach Schüttdichte und theoretischer Dichte der Pulvermischungen werden Pressdrücke von 400 bis 1200 MPa hierfür angewandt.

Die auf diese Weise gewonnenen Presslinge (auch Grünling genannt) sind Ausgang für die anschließenden Prozessschritte.

Anstelle der koaxialen Pressverfahren können auch andere Pressverfahren angewandt werden, wie sie in der Sintertechnologie üblich sind, also z.B. auch isostatische Pressverfahren, etc.. Zur Erreichung von reproduzierbaren Maßverhalten beim Sintern ist beim Pressen auf eine möglichst gleichmäßige oder zumindest gut reproduzierbare Dichteaufteilung innerhalb des Bauelementes 2, 3 zu achten. Da beim Sintern aufgrund des erhöhten Kohlenstoff-Anteils bei den verwendeten Temperaturen eine flüssige Phase entsteht ist beim Pressen jene Dichte zu wählen bei der sich eine möglichst gleichmäßige Dichteverteilung erreichen lässt. Aufgrund des hohen Kohlenstoff-Anteils ist die theoretisch erreichbare Volldichte sehr niedrig (ca. 7,5 g/cm³). Typische Pressdichten liegen daher bei 6,4 g/cm³ - 6,6 g/cm³ können aber auch höher gewählt werden je nach chemischer Zusammensetzung und Verpressbarkeit des Pulvers.

Die gegebenenfalls erforderlichen Schmiermittel können entweder mit konventionellen Tauchmethoden oder bevorzugt mittels Sprühverfahren vor oder während dem Pressen auf das Bauteil aufgebracht werden.

### 3) Entwachsen + Sintern

Die Presslinge werden durch thermische Behandlung bevorzugt unter Einwirkung von zumindest teilweise aufkohlender oder leicht oxidierender Atmosphärengase entwachst, d.h. zumindest teilweise vom organischen Bindemittel und von Schmiermitteln durch Ausbrennen befreit, und gesintert, bevorzugt in kontinuierlich arbeitenden Sinteröfen. Hierbei werden reduzierende Atmosphären durch Verwendung von Stickstoff-Wasserstoff-Gemischen mit bis zu 30 Vol.-% Wasserstoffanteil erreicht. Optional können auch Aufkohlungsgase, wie z.B. Methan, Propan, oder dergleichen, verwendet werden oder durch leicht oxidierenden Charakter des Prozessgases (gegebenenfalls nur in Teilbereichen des Sinterofens) das Entwachsen unterstützt werden, beispielsweise durch Endogas, befeuchteten Stickstoff, oder dergleichen. Das Sintern kann aber auch unter Vakuum erfolgen, wodurch eine Stabilisierung der Flüssigphase beim Sintern erreicht werden kann.

Die Temperaturen beim Sintern liegen zwischen 1050 °C und 1350 °C je nach verwendetem Legierungssystem, die Sinterhaltezeit beträgt zwischen etwa 2 Minuten und 1,5 Stunden.

Generell sollte beim Sintern eine Sintertemperatur eingehalten werden die ganz knapp oberhalb oder entlang der Gleichgewichtslinie zwischen dem "Gamma" und dem "Gamma+Schmelze" Gebiet im bekannten Eisen-Kohlenstoff-Diagramm liegen, da sich bei höheren Temperaturen bei einer spezifischen Zusammensetzung zu viel Schmelze bildet, wodurch sich extremer, unkontrollierbarer Verzug des Bauteils einstellt (Elefantenfuß, Sanduhr,...). Von Vorteil ist es dabei, wenn die Sintertemperatur bei dem gewählten jeweiligen Kohlenstoffanteil des Sinterpulvers im Bereich zwischen der Gleichgewichtslinie zwischen "Gamma" und "Gamma+Schmelze" und maximal 20 %, vorzugsweise maximal 10 % oberhalb der genannten Gleichgewichtstemperatur, die diesem Kohlenstoffanteil entspricht, beträgt.

Die Prozessführung beim Sintern wird so gewählt, dass sich trotz entstehender Flüssigphase ein möglichst geringer Bauteilverzug ergibt. Die Reproduzierbarkeit des Ergebnisses wird durch entsprechende Prozesskontrolle, wie Atmosphärenkontrolle, Temperaturregelung, Taupunktmessung, etc., unterstützt.

Rasche Erwärmung auf Temperaturen, insbesondere mit Aufheizraten von 10 K/s, welche zur Bildung von Flüssigphase führen, und kurze Sinterzeiten, insbesondere zwischen 1 Minuten und 12 Minuten, ermöglichen gute Dimensionskontrolle. Die Flüssigphase setzt je nach Legierungszusammensetzung bei erreichen einer bestimmten Temperatur spontan ein. Zu langes Halten auf Sintertemperatur führt zu Verzügen am Bauteil und ist daher nach Möglichkeit zu vermeiden. Die Haltezeit wird bevorzugt aus einem Bereich ausgewählt mit einer unteren Grenze von 8 Minuten und einer oberen Grenze von 10 Minuten. Längere Haltezeiten - die zumindest annähernd vollständige Durchwärmung des Bauelementes 2, 3 vorausgesetzt - führen kaum mehr zu einer weiteren Verdichtung. Mit längeren Haltezeiten wächst aber die Gefahr des Bauteilverzugs.

Die Bauelemente 2, 3 werden bevorzugt mit einer Abkühlrate abgekühlt, die ausgewählt ist aus einem Bereich mit einer unteren Grenze von 0,5 K/s, insbesondere 1 K/s, und 20 K/s, vorzugsweise 15 K/s.

Gegebenenfalls können zur Erreichung höherer Dichten die Presslinge auch durch thermische Behandlung bei einer Temperatur von unterhalb 1100 °C unter Einwirkung voranstehend genannter reduzierender Atmosphärengase vorgesintert undeventuell nachgepresst werden, insbesondere bei gleichzeitigem entwachsen. Es kann damit die Herstellung eines leichten Sinterverbundes zwischen den Partikeln erreicht werden.

Aufgrund des Verdichtens zu annähernd Volldichte während dem Sintern zumindest in oberflächennahen Bereichen, vorzugsweise im gesamten Bautelement, können nicht nur verbesserte mechanische Eigenschaften erreicht werden, sondern auch eine sehr hohe Dichtheit gegen Luft und flüssige Medien ein, wodurch die nach dem erfindungsgemäßen Verfahren hergestellten Bautelemente insbesondere auch in Pumpen, beispielsweise Treibstoffpumpen, verwendet werden können.

### 4) Thermische Nachbehandlung

Verschiedene aus dem Stand der Technik bekannte Wärmebehandlungen sind anwendbar. Thermische Prozesse können verwendet werden um das Verhältnis von Ferrit- zu Perlit-Gefügebestandteilen zu verändern. Weiters ist mittels Wärmebehandlungen das Verändern der Ausformung des frei vorliegenden Grafits möglich.

### 5) Mechanische Bearbeitung

Alle bekannten Verfahren der mechanischen Nachbearbeitung oder Beschichtung sind möglich.

Nach diesem Prozessablauf wurden folgende Beispiele für Pulvermischungen gemäß Tabelle 1 zu Bauelementen 2 und/oder 3 verarbeitet. Die Angaben sind dabei jeweils als Gew.-% zu verstehen. Den Rest auf 100 Gew.-% bildet dabei jeweils Eisen.

**Tabelle 1: Beispielszusammensetzungen**

| Nr. | C | Si | Ni | Mo | Mn | Mg | V | W | Al | Presshilfsmittel | ggfs.Binder |
|---|---|---|---|---|---|---|---|---|---|---|---|
| 1 | 2,5 | | | | | | | | | 0,3 | 0,2 |
| 2 | 2,0 | 1,1 | | | | | | | | 0,4 | 0,1 |
| 3 | 3 | 1 | | | | | | | | 0,4 | 0,2 |
| 4 | 5,9 | 1,5 | 0,5 | | | 0,2 | | | | 0,8 | 0,1 |
| 5 | 7,2 | 3,1 | | | | 0,9 | | | | 0,5 | 0,3 |
| 6 | 1,8 | 1,5 | | | | | | | | 0,4 | 0,1 |
| 7 | 4,5 | | 2,1 | 0,3 | | | | | 0,8 | 0,6 | 0,5 |
| 8 | 3,1 | | | 0,8 | 0,5 | | 0,15 | | | 0,8 | 0,4 |
| 9 | 5,6 | 2,8 | | | | 0,5 | | 0,5 | | 0,5 | 0,5 |
| 10 | 3,5 | | | | | 2,2 | | | 1,1 | 0,8 | 0,5 |

Diese Zusammensetzungen wurden gemäß den Parametern in Tabelle 2 pulvermetallurgisch verarbeitet. Die Sinteratmosphäre entsprach den voranstehenden Angaben.

**Tabelle 2: Verarbeitungsparameter**

| Nr. | Pressdruck [MPa] | Aufheizrate [°C/s] | Sintertemperatur [°C] | Haltezeit während des Sinterns [min] | Abkühlrate [°C/s] |
|---|---|---|---|---|---|
| 1 | 450 | 0,5 | 1050 | 15 | 2 |
| 2 | 600 | 10 | 1200 | 10 | 1,8 |
| 3 | 600 | 20 | 1150 | 15 | 5 |
| 4 | 1100 | 10 | 1300 | 2 | 2 |
| 5 | 1200 | 20 | 1350 | 5 | 6 |
| 6 | 1000 | 10 | 1150 | 10 | 0,5 |
| 7 | 700 | 9 | 1180 | 7 | 2 |
| 8 | 700 | 16 | 1250 | 7 | 6 |
| 9 | 700 | 16 | 1350 | 2 | 2 |
| 10 | 900 | 10 | 1220 | 6 | 2 |

Von den fertigen Bauteilen 2 und/oder 3 wurden einerseits der relative Anteil des ungebunden in der Matrix vorliegende Kohlenstoffs, die Dichte, der Reibwert und die Härte bestimmt. Die Ergebnisse sind in Tabelle 3 zusammengefasst. Der frei vorliegende Grafit wurde dabei anhand von Schliffbildern bestimmt, wobei die in Tabelle 3 angegebenen Werte Mittelwerte aus jeweils fünf verschiedenen Schnitten sind. Die Dichte wurde nach dem Auftriebsprinzip bestimmt. Die Härte wurde als Vickershärte HV 5 bestimmt.

**Tabelle 3: Meßergebnisse**

| Nr | ungebundener Kohlenstoff [%] | Dichte [g/cm³] | Reibwert | HV 5 |
|---|---|---|---|---|
| 1 | 80 | 7,32 | 0,3 | 280 |
| 2 | 96 | 7,51 | 0,1 | 345 |
| 3 | 95 | 7,42 | 0,3 | 300 |
| 4 | 92 | 7,44 | 0,2 | 305 |
| 5 | 95 | 7,50 | 0,15 | 315 |
| 6 | 98 | 7,48 | 0,1 | 350 |
| 7 | 88 | 7,38 | 0,25 | 260 |
| 8 | 95 | 7,51 | 0,1 | 310 |
| 9 | 98 | 7,50 | 0,2 | 300 |
| 10 | 92 | 7,47 | 0,3 | 300 |

Aufgrund der festgestellten Kennwerte beträgt der Anteil des ungebunden Kohlenstoffs vorzugsweise zumindest 80 % bezogen auf den Gesamtkohlenstoffgehalt. Der gesamte Kohlenstoffanteil liegt dabei vorzugsweise zwischen 1,8 Gew.-% und 2,1 Gew.-%.

Anhand der Schliffbilder konnte weiters festgestellt werden, dass es von Vorteil in Hinblick auf die Eigenschaftend der Sinterlegierung ist, wenn der ungebundene Kohlstoff eine Partikelgröße aufweist mit einer Länge zwischen 50 µm und 300 µm, insbesondere zwischen 100 µm und 200 µm, und einer Breite zwischen 5 µm und 70 µm, insbesondere zwischen 8 µm und 18 µm, wobei es zusätzlich von Vorteil ist, wenn das Verhältnis der Länge zur Breite der Kohlenstoffpartikel zumindest 2:1, insbsondere zumindest 5:1, bevorzugt mindestens 10:1, beträgt.

Es konnte anhand der Schliffbilder weiters festgestellt werden, dass es von Vorteil für das tribologische Verhalten der Bauelemente 2 und/oder 3 ist, wenn die Matrix ein aus Perlit und Ferrit zusammengesetztes Gefüge aufweist, wobei vorzugsweise das Verhältnis von Perlit zu Ferrit zwischen 95 : 5 und 50 : 50, insbesondere zwischen 90 : 10 und 80 : 20, beträgt. Es wurden dazu auch weitere Untersuchungen angestellt an einer Zusammensetzung entsprechend Beispiel 1 aus Tabelle 1, wobei festgestellt wurde, dass höhere Festigkeiten durch entsprechende Wärmebehandlung über die Variation des Perlit/Ferrit Verhältnisses und gegebenenfalls unterschiedlich ausformbarem freiem Kohlenstoff erreicht werden können. Die Ergebnisse sind in Tabelle 4 zusammengefasst. Der Perlit-Anteil der Matrix wurde dabei wiederum aus Schliffbildern bestimmt, wobei der Rest auf 100 Vol.-% zumindest annähernd zur Gänze durch aus Ferrit besteht.

**Tabelle 4: Einfluss des Ferrit/Perlit Verhältnisses**

| Nr. | Perlit-Anteil [%] | Wärmebehandlung | Härte HV10 |
|---|---|---|---|
| 11 | 95 | keine | 350 |
| 12 | 90 | 0,2 h; 150 °C | 320 |
| 13 | 70 | 0,5 h; 200 °C | 250 |
| 14 | 50 | 1,8 h; 250 °C | 180 |

Erfindungsgemäß nimmt der Perlitanteil der Matrix in Richtung auf die Gleitfläche zu. Erreicht kann dies beispielsweise dadurch werden, dass das Bautelement 2 und/oder 3 kurzzeitig einer Wärmebehandlung unterzogen wird, beispielsweise wie in Tabelle 4 angeführt, sodass das Bauelement 2 und/oder 3 nicht zur Gänze auf die Temperatur erhitzt wird, sodass eine erhöhte Perlitbildung nur in den Randbereichen des Bauelementes 2 und/oder 3 erfolgt.

Es ist weiters möglich, dass der Anteil an freiem Kohlenstoff in Richtung auf die Gleitfläche zunimmt, was z.B. durch eine aufkohlende Sinteratmosphäre bzw. eine aufkohlende Atmosphäre während der Abkühlung der Bauelemente 2 und/oder nach dem Sintern erreicht werden kann.

Zur Verbesserung der tribologischen Eigenschaften ist es zudem von Vorteil, wenn die Gleitfläche der Bauelemente 2 und/oder eine Oberflächenrauheit aufweist, wie sie typischerweise von geschliffenen Oberflächen bekannt ist.

Bevorzugt weisen die Bauelemente 2 und/oder 3 eine Dichte von zumindest 95 % der theoretischen Volldichte aufweist.

Die erfindungsgemäßen Bauelemente 2 und/oder 3 werden vorzugsweise in Pumpenanwendung oder zur Herstellung zumindest eines auf Gleitung beanspruchten Teils einer Kurbelwelle oder einer Lagerbuchse eines Verbrennungsmotors verwendet.

Die Ausführungsbeispiele zeigen mögliche Ausführungsvarianten der Baugruppe 1.

Der Ordnung halber sei abschließend darauf hingewiesen, dass zum besseren Verständnis des Aufbaus der Baugruppe 1 diese bzw. deren Bestandteile teilweise unmaßstäblich und/oder vergrößert und/oder verkleinert dargestellt wurden.

### Bezugszeichenaufstellung

- 1: Baugruppe
- 2: Bauelement
- 3: Bauelement
- 4: Flügelelement
- 5: Ausnehmung

- 6: Stirnseite
- 7: Oberfläche
- 8: Oberfläche
- 9:
- 10:

## Patentansprüche

1. Baugruppe (1), insbesondere Pumpe für ein Kraftfahrzeug, mit zumindest zwei auf Gleitung beanspruchten metallischen Bauelementen (2, 3), insbesondere einem Stator und einem Rotor, die jeweils eine Gleitfläche aufweisen, die im Betrieb aneinander abgleiten, wobei zumindest eines der Bauelemente (2, 3) zumindest im Bereich der Gleitbeanspruchung aus einem metallischen Sinterwerkstoff mit einer eisenbasierten Matrix besteht, der neben Eisen Kohlenstoff und bis zu 10 Gew.-% zumindest eines Nichteisenmetalls enthält, wobei der Kohlenstoffanteil mindestens 1 Gew.-% beträgt, der Kohlenstoffgehalt maximal 10 Gew.-% beträgt und zumindest ein Teil des Kohlenstoffs partikulär ungebunden in der Matrix vorliegt, und wobei die Matrix ein aus Perlit und Ferrit zusammengesetztes Gefüge aufweist, wobei auch Bainit auftreten kann, **dadurch gekennzeichnet, dass** der Perlitanteil der Matrix in Richtung auf die Gleitfläche zunimmt.

2. Baugruppe (1) nach Anspruch 1, **dadurch gekennzeichnet, dass** der Anteil des ungebunden Kohlenstoffs zumindest 80 % beträgt.

3. Baugruppe (1) nach Anspruch 1 oder 2, **dadurch gekennzeichnet, dass** der Kohlenstoffanteil zwischen 1,5 Gew.-% und 8 Gew.-% beträgt.

4. Baugruppe (1) nach einem der Ansprüche 1 bis 3, **dadurch gekennzeichnet, dass** der ungebundene Kohlstoff eine Partikelgröße aufweist mit einer Länge zwischen 50 µm und 300 µm und einer Breite zwischen 5 µm und 70 µm.

5. Baugruppe (1) nach einem der Ansprüche 1 bis 4, **dadurch gekennzeichnet, dass** das Verhältnis von Perlit zu Ferrit zwischen 95 : 5 und 50 : 50 beträgt.

6. Baugruppe (1) nach einem der Ansprüche 1 bis 5, **dadurch gekennzeichnet, dass** der Anteil an freiem Kohlenstoff in Richtung auf die Gleitfläche zunimmt.

7. Baugruppe (1) nach einem der Ansprüche 1 bis 6, **dadurch gekennzeichnet, dass** zumindest eines der Nichteisenmetalle durch Silizium gebildet ist.

8. Baugruppe (1) nach Anspruch 7, **dadurch gekennzeichnet, dass** der Siliziumanteil zwischen 0,5 Gew.-% und 6 Gew.-% beträgt.

9. Baugruppe (1) nach einem der Ansprüche 1 bis 8, **dadurch gekennzeichnet, dass** die Gleitfläche eine Oberflächenrauheit Rz von maximal 2,0 µm aufweist.

10. Baugruppe (1) nach einem der Ansprüche 1 bis 9, **dadurch gekennzeichnet, dass** das Bauelement (2, 3) aus dem Sinterwerkstoff eine Dichte von zumindest 95 % der theoretischen Volldichte aufweist.

11. Baugruppe (1) nach einem der Ansprüche 1 bis 10, **dadurch gekennzeichnet, dass** die Gleitfläche frei von einer Phosphatbeschichtung ist.

12. Baugruppe (1) nach einem der Ansprüche 1 bis 11, **dadurch gekennzeichnet, dass** der Kohlenstoff in der bzw. den Kernschichten globularer und gröber vorliegt als in der Randschicht des Bauelementes (2, 3), wobei die Randschicht eine Schichtdicke bis 2mm aufweist.

13. Baugruppe (1) nach Anspruch 7 oder 8, **dadurch gekennzeichnet, dass** der Anteil an Silizium zum Anteil an Kohlenstoff ausgewählt ist aus einem Bereich von 1 : 1 bis 4 : 1.

14. Verfahren zur Herstellung eines Bauelementes (2, 3) einer Baugruppe entsprechend einem der Ansprüche 1 bis 13 mit reduzierter Metallhaftung durch Flüssigphasensintern eines Pulvergemisches aus einem metallischen Sinterwerkstoff auf Eisenbasis, der neben Eisen Kohlenstoff und bis zu 10 Gew.-% zumindest eines Nichteisenmetalls enthält, wobei der Kohlenstoff in einem Anteil von mindestens 1 Gew.-% bis maximal 10 Gew.-% der Eisenbasis zugesetzt wird und zumindest ein Teil des Kohlenstoffs, der während oder nach dem Sintern partikulär ungebunden in der Matrix vorliegt, ausgeschieden wird, und wobei die Matrix ein aus Perlit und Ferrit zusammengesetztes Gefüge aufweist, in dem auch Bainit auftreten kann, **dadurch gekennzeichnet, dass** das Bauelement (2, 3) nach dem Sintern und vor einer optionalen mechanischen Bearbeitung kurzzeitig einer Wärmebehandlung unterzogen wird, sodass das Bauelement (2, 3) nicht zur Gänze auf die Temperatur erhitzt wird, sodass der Perlitanteil der Matrix in Richtung auf die Gleitfläche zunimmt.

15. Verfahren nach Anspruch 14, **dadurch gekennzeichnet, dass** das Sintern und/oder das nach dem Sintern anschließende Abkühlen des Bauelementes (2, 3) in einer kohlenstoffhältigen Atmosphäre durchgeführt wird.

16. Verfahren nach Anspruch 14 oder 15, **dadurch gekennzeichnet, dass** der Bauelement (2, 3) nach dem Sintern mit einer Abkühlrate von maximal 15 K/s abgekühlt wird.

17. Verfahren nach einem der Ansprüche 14 bis 16, **dadurch gekennzeichnet, dass** durch das Pulverpressen eine Grünlingsdichte zwischen 6,4 g/cm³ - 6,6 g/cm³ erreicht wird.

18. Verfahren nach einem der Ansprüche 14 bis 16, **dadurch gekennzeichnet, dass** das Sintern bei einer Sintertemperatur durchgeführt wird, die im Bereich zwischen der Gleichgewichtslinie zwischen "Gamma" und "Gamma+Schmelze" des Eisen-Kohlenstoffdiagramms und maximal 20 % oberhalb der genannten Gleichgewichtstemperatur, die dem entsprechenden Kohlenstoffanteil entspricht, liegt.

## Claims

1. Assembly (1), in particular a pump for a motor vehicle, comprising at least two metal components (2, 3) which are subject to sliding stress, in particular a stator and a rotor, which each have a sliding surface and in operation slide against one another, where at least one of the components (2, 3) at least in the area of sliding stress consists of a metal sintered material having an iron-based matrix, which in addition to iron contains carbon and up to 10 wt.% of at least one non-ferrous metal, the proportion of carbon content being at least 1 wt.%, the carbon content is a maximum of 10 wt.% and at least a portion of the carbon is present in unbound particulate form in the matrix and where the matrix has a structure composed of pearlite and ferrite, and where bainit may also be found, **characterized in that** the proportion of perlite in the matrix increases in the direction of the sliding surface.

2. Assembly (1) according to claim 1, **characterized in that** the proportion of unbound carbon is at least 80 %.

3. Assembly (1) according to one of claims 1 to 2, **characterized in that** the proportion of carbon is between 1.5 wt.% and 8 wt.%.

4. Assembly (1) according to one of claims 1 to 3, **characterized in that** the unbound carbon has a particle size with a length of between 50 µm and 300 µm and a width of between 5 µm and 70 µm.

5. Assembly (1) according to one of claims 1 to 4, **characterized in that** the ratio of perlite to ferrite is between 95 : 5 and 50 : 50.

6. Assembly (1) according to one of claims 1 to 5, **characterized in that** the proportion of free carbon increases in the direction of the sliding surface.

7. Assembly (1) according to one of claims 1 to 6, **characterized in that** at least one of the non-ferrous metals is formed by silicon.

8. Assembly (1) according to claim 7, **characterized in that** the proportion of silicon is between 0.5 wt.% and 6 wt.%.

9. Assembly (1) according to one of claims 1 to 8, **characterized in that** the sliding surface has a surface roughness Rz of a maximum of 2.0 µm.

10. Assembly (1) according to one of claims 1 to 9, **characterized in that** the component (2, 3) made of sintered material has a density of at least 95 % of the theoretic full density.

11. Assembly (1) according to one of claims 1 to 10, **characterized in that** the sliding surface is free of a phosphate coating.

12. Assembly (1) according to one of claims 1 to 11, **characterized in that** the carbon in the core layer or the core layers is more globular and coarser than in the edge layer of the component (2, 3), wherein the edge layer has a layer thickness of up to 2mm.

13. Assembly (1) according to claim 7 or 8, **characterized in that** the proportion of silicon to the proportion of carbon is selected from a range of from 1 : 1 to 4 : 1.

14. Method for the production of a component (2, 3) of an assembly according one of claims 1 to 13 with reduced metal adhesion by means of the liquid phase sintering of a powder mixture made from a metal sintered material with an iron base, which in addition to iron contains carbon and up to 10 wt.% of at least a non-ferrous metal, where the carbon is added to the iron base in a proportion of at least 1 wt.% up to a maximum of 10 wt.% and at least a portion of the carbon present in unbound particulate form in the matrix is deposited during or after the sintering, and where the matrix has a structure composed of perlite and ferrite where also where bainit may also be present, **characterized in that** the component (2, 3) after the sintering and prior to an optional mechanical processing can be briefly subjected to a heat treatment, so that the component (2, 3) is not completely heated to the temperature, so that the proportion of perlite in the matrix increases in the direction of the sliding surface.

15. Method according to claim 14, **characterized in that** the sintering and/or the cooling of the component (2, 3) after the sintering is performed in an atmosphere containing carbon.

16. Method according to claim 14 or 15, **characterized in that** the component (2, 3) is cooled after sintering at a cooling rate of a maximum of 15 K/s.

17. Method according to one of claims 14 to 16, **characterized in that** a pressing density of 6.4 g/cm³ - 6.6 g/cm³ can be achieved by compressing powder.

18. Method according to one of claims 14 to 16, **characterized in that** the sintering is carried out at a sintering temperature which is in the range between the equilibrium line between "gamma" and "gamma+melt" of the iron carbon diagram and a maximum of 20 %, above the said equilibrium temperature, which corresponds to said amount of carbon.

## Revendications

1. Sous-ensemble (1), plus particulièrement pompe pour un véhicule automobile, avec au moins deux composants métalliques (2, 3) sollicités en glissement, plus particulièrement un stator et un rotor, qui comprennent chacun une surface de glissement, qui glissent l'un sur l'autre lors du fonctionnement, au moins un des composants (2, 3) étant constitué, au moins au niveau de la sollicitation de glissement, d'un matériau métallique fritté avec une matrice à base de fer, qui contient, en plus de fer et de carbone, jusqu'à 10 % en poids d'au moins un métal non ferreux, la part de carbone étant d'au moins 1% en poids, la teneur en carbone s'élevant au maximum à 10% en poids et au moins une partie du carbone étant présente dans la matrice sous une forme particulaire non liée, et la matrice présentant une structure composée de perlite et de ferrite, de bainite pouvant également être présente, **caractérisé en ce que** la part de perlite de la matrice augmente en direction de la surface de glissement.

2. Sous-ensemble (1) selon la revendication 1, **caractérisé en ce que** la part de carbone non lié est d'au moins 80%.

3. Sous-ensemble (1) selon la revendication 1 ou 2, **caractérisé en ce que** la part de carbone est entre 1,5 % et 8% en poids.

4. Sous-ensemble (1) selon l'une des revendications 1 à 3, **caractérisé en ce que** le carbone non lié présente une taille de particules avec une longueur entre 50 µm et 300 µm et une largeur entre 5 µm et 70 µm.

5. Sous-ensemble (1) selon l'une des revendications 1 à 4, **caractérisé en ce que** le rapport entre la perlite et la ferrite est de 95:5 à 50:50.

6. Sous-ensemble (1) selon l'une des revendications 1 à 5, **caractérisé en ce que** la part de carbone libre augmente en direction de la surface de glissement.

7. Sous-ensemble (1) selon l'une des revendications 1 à 6, **caractérisé en ce qu'**au moins un des métaux non ferreux est constitué de silicium.

8. Sous-ensemble (1) selon la revendication 7, **caractérisé en ce que** la part de silicium est de 0,5 % à 6 % en poids.

9. Sous-ensemble (1) selon l'une des revendications 1 à 8, **caractérisé en ce que** la surface de glissement présente une rugosité de surface Rz de 2,0 µm maximum.

10. Sous-ensemble (1) selon l'une des revendications 1 à 9, **caractérisé en ce que** le composant (2, 3) en matériau fritté présente une densité représentant au moins 95% de la densité entière théorique.

11. Sous-ensemble (1) selon l'une des revendications 1 à 10, **caractérisé en ce que** la surface de glissement est exempte de revêtement phosphaté.

12. Sous-ensemble (1) selon l'une des revendications 1 à 11, **caractérisé en ce que** le carbone se présente, dans la ou les couches centrales, sous une forme plus globulaire ou plus grossière que dans la couche de bord du composant (2, 3), la couche de bord présentant une épaisseur jusqu'à 2 mm.

13. Sous-ensemble (1) selon l'une des revendications 7 ou 8, **caractérisé en ce que** la part de silicium par rapport à la part de carbone est choisie dans une plage de 1:1 à 4:1.

14. Procédé de fabrication d'un composant (2, 3) d'un sous-ensemble correspondant à une des revendications 1 à 13, avec une adhérence métallique réduite par un frittage en phase liquide d'un mélange de poudre constitué d'un matériau métallique fritté à base de fer, qui contient, en plus du fer, du carbone et jusqu'à 10 % en poids d'au moins un métal non ferreux, le carbone étant ajouté à la base de fer avec une proportion d'au moins 1 % en poids jusqu'à 10 % en poids maximum et au moins une partie du carbone, qui est présent sous une forme non liée dans la matrice pendant ou après le frittage, est séparée et la matrice présentant une structure constituée de perlite et de ferrite, dans laquelle de la bainite peut également être présente, **caractérisé en ce que** le composant (2, 3) est soumis, après le frittage et avant un usinage mécanique optionnel, à un bref traitement thermique, de façon à ce que le composant (2, 3) ne soit pas chauffé entièrement à la température, de façon à ce que la part de perlite de la matrice augmente en direction de la surface de glissement.

15. Procédé selon la revendication 14, **caractérisé en ce que** le frittage et/ou le refroidissement suivant le frittage du composant (2, 3) a lieu dans une atmosphère contenant du carbone.

16. Procédé selon la revendication 14 ou 15, **caractérisé en ce que** le composant (2, 3) est refroidi, après le frittage, avec un taux de refroidissement de 15 K/s maximum.

17. Procédé selon l'une des revendications 14 à 16, **caractérisé en ce que** le pressage de poudre permet d'obtenir une densité d'ébauche compactée de 6,4 g/cm3 à 6,6 g/cm3.

18. Procédé selon l'une des revendications 14 à 16, **caractérisé en ce que** le frittage est réalisé à une température de frittage qui se trouve dans la zone entre la ligne d'équilibre entre « gamma » et « gamma + fonte » du diagramme fer-carbone et au maximum 20 % de la température d'équilibre mentionnée, qui correspond à la part de carbone correspondante.
